**Europäisches Patentamt**

**European Patent Office**

**Office européen des brevets**

(11) Veröffentlichungsnummer: **0 121 862**
**B1**

# EUROPÄISCHE PATENTSCHRIFT

(45) Veröffentlichungstag der Patentschrift:
**02.11.88**

(51) Int. Cl.⁴: **B 60 C 9/00,** D 03 D 1/00

(21) Anmeldenummer: **84103397.0**

(22) Anmeldetag: **28.03.84**

(54) **Fahrzeugluftreifen.**

(30) Priorität: **09.04.83 DE 3312785**

(43) Veröffentlichungstag der Anmeldung:
**17.10.84 Patentblatt 84/42**

(45) Bekanntmachung des Hinweises auf die Patenterteilung:
**02.11.88 Patentblatt 88/44**

(84) Benannte Vertragsstaaten:
**AT BE CH DE FR GB IT LI LU NL SE**

(56) Entgegenhaltungen:
**CH-A-472 519**
**FR-A-1 518 797**
**FR-A-1 554 708**
**US-A-1 367 751**
**US-A-1 368 214**

(73) Patentinhaber: **Continental Aktiengesellschaft,**
**Königsworther Platz 1, D-3000 Hannover 1 (DE)**

(72) Erfinder: **Dudziak, Karl- Heinz, Dr. Dipl.- Phys.,**
**Königsberger Strasse 9, D-3008 Garbsen 6 (DE)**

### Beschreibung

Die Erfindung betrifft einen Fahrzeugluftreifen gemäss dem Oberbegriff des Patentanspruchs 1.

Bei derartigen bekannten, als Verstärkungseinlagen für Fahrzeugluftreifen bestimmten, ununterbrochen von einem zum anderen Rand des Reifenkörpers geführten Geweben sind die Schussfäden um ein zu ihrer Halterung im Gewebeverband ausreichendes Mass in das Gewebe zurückgeführt (US-A-1 368 214). Damit soll eine Randverstärkung des Gewebes erreicht werden.

Es sind ferner Vollgewebe, also aus Schuss und Kette bestehende Gewebe bekannt (FR-A-1 554 708), bei denen die Schussfäden als endliche Fäden ausgeführt sind, deren Enden um ein zu ihrer Halterung im Gewebeverband ausreichendes Mass in das Gewebe zurückgeführt sind. Diese bekannten Gewebe sind jedoch kein Reifencordgewebe, dessen Schussfäden nur die Aufgabe haben, die Kettfäden zusammenzuhalten. Somit kann dieser bekannte Vorschlag auch keine Hinweise zur Anordnung und Ausbildung von Gewebeüberlappungsstellen geben.

Weiterhin ist es bei Reifencordgeweben mit die Kettfäden zusammenhaltenden Schussfäden bekannt, aus diesen Geweben geschnittene Abschnitte zur Bildung von Cordbahnen zu überlappen. Bei diesem Gewebe sind die Schussfäden endlos von einem zum anderen Geweberand hin- und hergeführt.

Dadurch ergibt sich der nicht vermeidbare Nachteil einer grösseren Fadendichte der Kettfäden im Bereich der Bahnränder, ein Nachteil, der unmittelbar auf die vorgenannte Führung der Schüssfäden zurückzuführen ist. Ungleichmässige Fadendichten führen jedoch zu Ungleichförmigkeiten in der Karkasse und im Gürtel des Reifens.

Der Erfindung liegt die Aufgabe zugrunde, Fahrzeugluftreifen der eingangs erwähnten Art so auszubilden, dass unter Nutzung des Vorteils einer Bildung von Bahnen grösserer Länge durch Überlappen von Cordgewebeabschnitten, etwaige, durch unvorschriftsmässige Fadenlagen bedingte Ungleichförmigkeiten weitgehend auszuschalten.

Diese Aufgabe wird durch die im Patentanspruch 1 gekennzeichneten Merkmale gelöst. Zweckmässigerweise beträgt dabei das Mass der Rückführung der Schussfäden 10 bis 20 mm, und zwar insb. bei einer Fadendichte der Kettfäden von 50 bis 150 Fäden/10 cm bzw. im Mittel 100 Fäden/10 cm. Weitere zweckmässige Ausgestaltungen sind in den Unteransprüchen gekennzeichnet.

Die so verstärkten Fahrzeugluftreifen haben Verstärkungseinlagen mit einer Kettfadendichte, die von Rand zu Rand praktisch gleichmässig ist. Verlagerungen der Kettfäden können nicht entstehen, weil infolge der geringen Länge der rückgeführten Enden ein Spannungsabbau im Gewebeverband und keine unerwünschte Verlagerung der Kettfäden eintreten.

In der Zeichnung sind Ausführungsbeispiele der Erfindung dargestellt. Es zeigen:

Fig. 1 einen radialen Teilschnitt durch einen Fahrzeugluftreifen,
Fig. 2 einen Teilschnitt durch die Karkasse des Reifens gemäß Fig. 1,
Fig. 3 eine Teildraufsicht auf das Karkaßgewebe gemäß Fig. 2 und

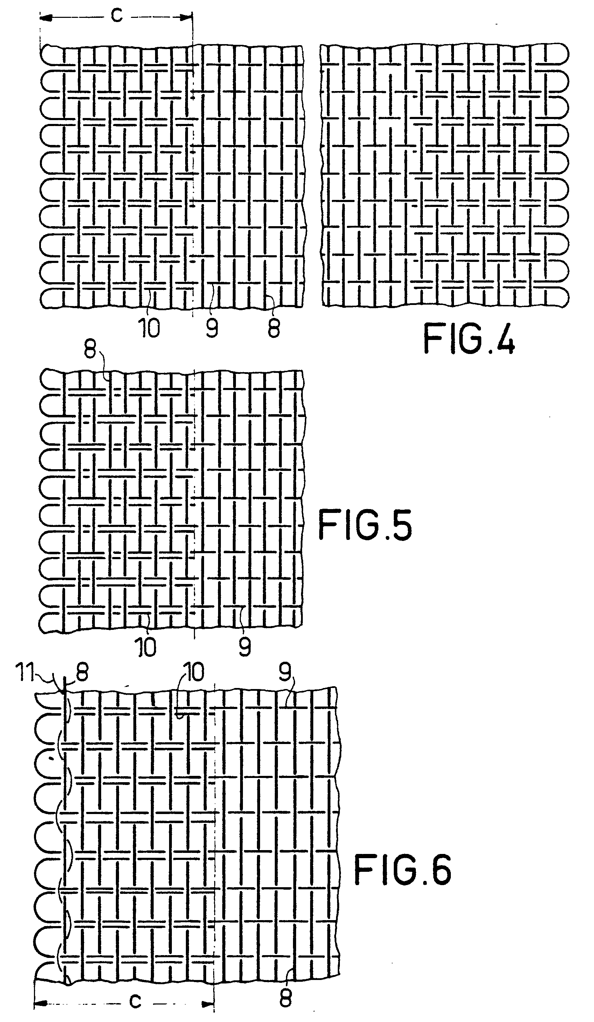

Fig. 4, 5 und 6 je Draufsichten auf Karkaßgewebeabschnitte von Geweben abgewandelter Ausbildung (der Darstellung der Fig. 3 entsprechend).

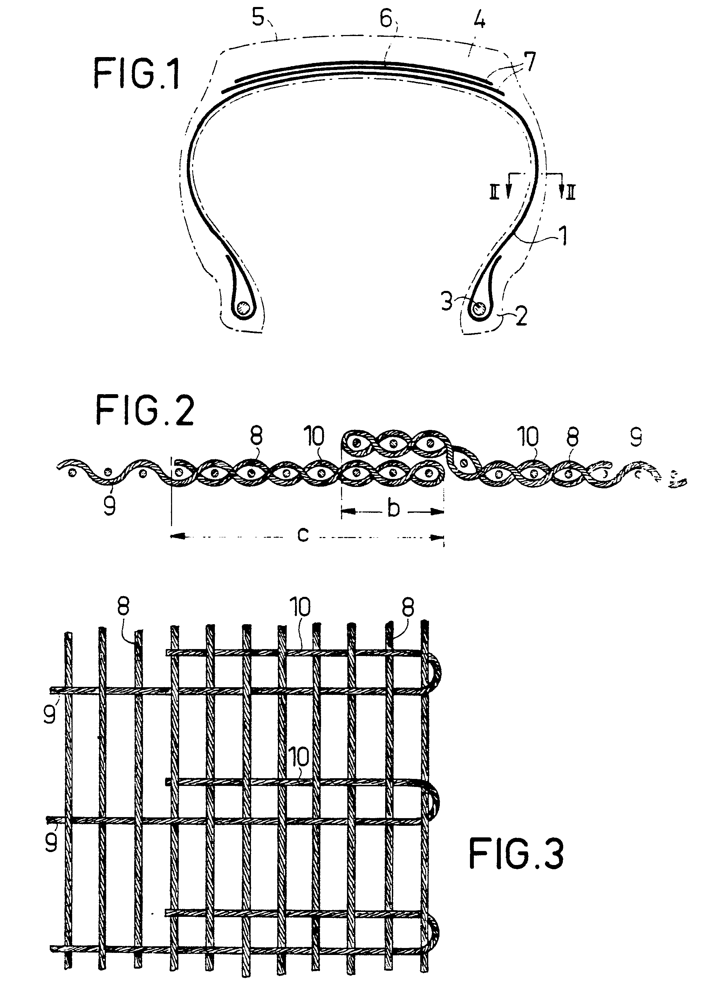

Der im wesentlichen aus Gummi oder gummiähnlichen Kunststoffen bestehende Reifenkörper hat eine Karkasse 1, die ununterbrochen von einem Wulst 2 zum anderen Wulst 2 geführt und dort durch Umschlingen der Wulstkerne 3 verankert ist. Zwischen dem Laufstreifen 4 und der Karkasse 1 befindet sich ein in Umfangsrichtung zugfester, sich im wesentlichen über die Breite der Lauffläche 5 erstreckender Gürtel 6 aus zwei übereinanderliegenden Lagen 7. In üblicher Weise sind alle Verstärkungseinlagen des Luftreifens gemäß Fig. 1 festhaftend durch Vulkanisieren in dem aus Gummi oder dergl. bestehenden Reifenkörper angeordnet.

Sowohl die einlagige Karkasse 1 als auch die beiden Lagen 7 des Gürtels 6 bestehen aus Cordgewebe mit in Parallelstellung angeordneten beliebigen fadenförmigen Kettfäden 8, die bei der Karkasse 1 in zum Reifen radialen Ebenen angeordnet sind, sich bei dem Gürtel 6 jedoch unter Bildung eines symmetrischen Rautenverbandes kreuzen. In einer Lage 7 verlaufen somit die Kettfäden 8 in der einen und in der anderen Lage 7 die Kettfäden in der entgegengesetzten Schrägrichtung.

Die die Lagen 7 und die Karkasse 1 bildende Verstärkungseinlage des Reifens ist aufgrund ihrer Ringform und Im Hinblick auf die Herstellung des Reifencordgewebes aus Abschnitten zusammengesetzt, die sich aus fabrikationstechnischen Gründen um das Maß b überlappen. Das Überlappungsmaß beträgt im wesentlichen zwei bis drei Kettfäden und somit im wesentlichen etwa 2 bis 4 mm.

Um die Cordbahnen für die Karkasse 1 und den Gürtel 6 in gehöriger Weise verarbeiten z. B. gummieren zu können, sind Baumwollschußfäden 9 vorgesehen, die nach der Konfektion des Reifens ihre Aufgabe praktisch erfüllt haben und dann zerstört werden können, ohne Nachteile in Bezug auf die Festigkeit des Reifens in Kauf nehmen zu müssen.

Wichtig ist nun, daß die Schußfäden 9 nicht fortlaufend über die einzelnen Bahnen hin- und hergeführt sind, sondern nur um das Maß c zurückgeführt sind, das etwa 10 bis 20 mm betragen soll. Beim Beschießen der Kettfäden 8 werden somit die Schußfäden 9 nicht fortlaufend hin- und hergeführt, sondern es werden nur endliche Fadenabschnitte verwendet bzw. Ablängungen vorgenommen. Die zurückgeführten Enden der Schußfäden 9 sind in der Zeichnung mit 10 bezeichnet.

Die Länge der Enden 10 soll möglichst klein gehalten werden, so daß ihre Fixierung gerade sichergestellt ist. Bei der Ausführungsform nach den Fig. 1 bis 3 sind auf 10 cm Gewebebreite etwa 100 Kettfäden 8 angeordnet, während auf einer Länge der Gewebebahn von 10 cm nur etwa 10 Schußfäden 9 verwendet werden.

Demgemäß ist das Maß c etwa drei- bis zehnmal größer als die Überlappungsbreite b.

Um den Einfluß der Enden 10 zu verändern, können gegenüber den Fig. 2 und 3 abweichende Ausbildungen insbesondere im Hinblick auf die Bindungen der zurückgeführten Enden 10 benutzt werden, wobei es sich versteht, daß der Einfluß der Enden 10 so gering wie möglich gehalten werden soll, jedoch stets sicherzustellen ist, daß die Enden 10 zumindest für den Konfektionsvorgang des Reifens die vorgeschriebene Stellung beibehalten.

Gemäß Fig. 6 wird der am Rand befindliche Cordfaden 8 als Steherfaden benutzt; ein dünnes Baumwollgarn 11 dient dabei als Dreher zur besonderen Fixierung bzw. zum Einklemmen der Enden 10.

Der erfindungsgemäße Aufbau der Verstärkungseinlagen ist in besonderer Weise für Radialkarkassen geeignet, weil hier eine besonders gleichmäßige Gestaltung der Karkaßfäden wichtig ist.

## Patentansprüche

1. Fahrzeugluftreifen mit einer Karkasse (1) und/oder einem Gürtel (6) als Verstärkungseinlagen aus einem aus Schußund Kettfäden (9, 8) bestehenden Cordgewebe, bei dem die Schußfäden (9) um ein zu ihrer Halterung im Gewebeverband ausreichendes Maß (c) in das Gewebe zurückgeführt sind, dadurch gekennzeichnet, daß die Verstärkungseinlagen aus sich überlappenden Cordgewebeabschnitten bestehen, daß die Schußfäden (9) als endliche Fäden ausgebildet sind und daß das Maß (c) der Rückführung der freien Enden (10) der Schußfäden (9) in das Gewebe etwa drei- bis zehnmal größer ist als die Überlappungsbreite (b) benachbarter Cordgewebeabschnitte.

2. Luftreifen nach Anspruch 1, dadurch gekennzeichnet, daß die rückgeführten Enden (10) der Schußfäden (9) des Cordgewebes durch zusätzliche Randkettfäden (11) abgebunden sind.

3. Luftreifen nach Anspruch 2, dadurch gekennzeichnet, daß die zusätzlichen Randkettfäden (11) Dreherfäden, insbesondere aus Baumwollgarn, sind.

4. Luftreifen nach Anspruch 1, dadurch gekennzeichnet, daß das Maß (c) der Rückführung etwa 10 bis 20 mm beträgt.

5. Luftreifen nach Anspruch 1, dadurch gekennzeichnet, daß das Cordgewebe der Karkasse (1) aus radial verlaufenden Kettfäden (8) gebildet ist.

## Claims

1. Pneumatic vehicle tyre having a carcase (1) and/or a belt (6) as reinforcing members formed from a cord material comprising weft and warp filaments (9, 8), wherein the weft filaments (9) are guided back into the material by a dimension (c) which is sufficient to retain them in position in the material binding, characterised in that the reinforcing members comprise overlapping portions of cord material, the weft filaments (9) are formed as finite filaments, and the dimension (c) whereby the free ends (10) of the weft filaments (9) are guided back into the material is approximately three to ten times greater than che overlapping width (b) of adjacent portions of cord material.

2. Pneumatic tyre according to claim 1, characterised in that the ends (10) of the weft filaments (9) of the cord material which have been guided-back are bound by additional edge warp filaments (11).

3. Pneumatic tyre according to claim 2, characterised in that the additional edge warp filaments (11) are twisted filaments formed, in particular, from cotton yarn.

4. Pneumatic tyre according to claim 1, characterised in that the guide-back dimension (c) is approximately 10 to 20 mm.

5. Pneumatic tyre according to claim 1, characterised in that the cord material of the carcase (1) is formed from radially extending warp filaments (8).

## Revendications

1. Bandage pneumatique pour véhicules comprenant une carcasse (1) et/ou une ceinture (6) constituant des insertions de renforcement faites d'un tissu de câblé composé de fils de trame et de fils de chaîne (9, 8), dans lequel les fils de trame (9) sont réinsérés dans le tissu sur une longueur (c) qui est suffisante pour les maintenir dans l'assemblage du tissu, caractérisé en ce que les insertions de renforcement sont composées de segments de tissu de câblés disposés à recouvrement, en ce que les fils de trame (9) sont constitués par des fils coupés et en ce que la longueur (c) de réinsertion des extrémités libres (10) des fils de trame (9) dans le tissu est environ 3 à 10 fois plus grande que la largeur de recouvrement (b) entre segments voisins de tissus de câblés.

2. Bandage pneumatique selon la revendication 1, caractérisé en ce que les extrémités réinsérées (10) des fils de trame (9) du tissu de câblés sont liées par des fils de chaîne marginaux additionnels (11).

3. Bandage pneumatique selon la revendication 2, caractérisé en ce que les fils de chaîne marginaux additionnels (11) sont des fils enroulés, qui sont faits en particulier de fil de coton.

4. Bandage pneumatique selon la revendication 1, caractérisé en ce que la longueur (c) de la réinsertion est d'environ 10 à 20 mm.

5. Bandage pneumatique selon la revendication 1, caractérisé en ce que le tissu de câblé de la carcasse (1) est formé de fils de chaîne (8) s'étendant radialement.

0 121 862

FIG.1

FIG.2

FIG.3

1

FIG.4

FIG.5

FIG.6